# EUROPÄISCHE PATENTSCHRIFT

(11) **EP 2 681 137 B1**
(45) Veröffentlichungstag und Bekanntmachung des Hinweises auf die Patenterteilung: **22.04.2015**
(21) Anmeldenummer: 12714549.8
(22) Anmeldetag: 29.02.2012
(51) Int. Cl.: B65G 1/137

(54) **VORRICHTUNG UND VERFAHREN ZUM DEFINIERTEN ZWISCHENLAGERN UND KOMMISSIONIEREN PRODUZIERTER WAREN GLEICHER ART ABER UNTERSCHIEDLICHER GRÖSSE**
APPARATUS AND METHOD FOR THE DEFINED INTERMEDIATE STORAGE AND PICKING OF PRODUCED ARTICLES OF THE SAME TYPE BUT DIFFERENT SIZE
DISPOSITIF ET PROCÉDÉ PERMETTANT LE STOCKAGE INTERMÉDIAIRE DÉFINI ET LA PRÉPARATION DE COMMANDES DE PRODUITS DE MÊME TYPE MAIS DE TAILLE DIFFÉRENTE

(30) Priorität: 03.03.2011 DE 102011012950
(43) Veröffentlichungstag der Anmeldung: 08.01.2014
(73) Patentinhaber: Grenzebach Maschinenbau GmbH, 86663 Asbach-Baeumenheim (DE)
(72) Erfinder: HILL, Hans-Peter, 76187 Karlsruhe (DE)
(74) Vertreter: Kindermann, Peter
(86) Internationale Anmeldenummer: PCT/DE2012/000210
(87) Internationale Veröffentlichungsnummer: WO 2012/116690

(56) Entgegenhaltungen:
- EP-A2- 1 535 864
- JP-A- 6 086 470
- US-A- 4 538 950
- US-A1- 2008 131 255

## Beschreibung

Die vorliegende Erfindung betrifft eine Vorrichtung und ein Verfahren zum definierten Zwischenlagern und Kommissionieren produzierter Waren gleicher Art, aber unterschiedlicher Größe.

Als Beispiel für solche Waren dienen im Folgenden Fahrzeugreifen. Als weitere Waren sind zum Beispiel Fahrzeugfelgen unterschiedlicher Abmessungen oder auch zum Beispiel Käselaibe denkbar. Jedoch können auch, flächenmäßig anders strukturierte, stapelbare Waren mittels des erfindungsgemäßen Lager - und Kommissionssystems versorgt werden.

Moderne Fahrzeugreifen sind ein komplexes Hightech-Produkt mit mehr als zehn verschiedenen Gummimischungen und 15 bis 20 Bauteilen. Der Aufwand der bei der Entwicklung und Fertigung getrieben wird, ist hoch. Hierbei ist die Entwicklungsleistung nur der erste Schritt auf dem Weg zum Qualitätsprodukt. Die jeweilige Prozesskette wird erst durch eine fehlerfreie Fertigung erfolgreich abgeschlossen. Den hohen Produktionsstandard gewährleisten modernste Produktionsanlagen in Verbindung mit geschultem Personal und vielfältigen Kontrollmechanismen. Das beginnt schon bei der Auswahl an Rohmaterialien mittels zertifizierter Lieferanten.

Die Produktion selbst erfolgt in verschiedenen Fertigungsstufen an den Stationen Mischung, Innenschicht, Einlage, Kern und Apex, Gürtel, Laufstreifen, Zusammenbau und der Vulkanisation. Im Anschluss findet eine Qualitätskontrolle statt. In der Produktion werden etwa bis zu 300 verschiedene Typen an Fahrzeugreifen produziert. Diese produzierte Typenvielfalt muss bis zur Auslieferung an die Abnehmer gelagert werden und die jeweiligen Typen müssen leicht erreichbar zum Versand bereitgestellt werden können.

Zu diesem Zweck ist aus der DE 696 22 116 T2 ein Robotersystem bekannt, das einen Roboter der über eine Arbeitsfläche bewegbar ist, aufweist, der zum Bilden und Transportieren von mehrere Einheiten umfassenden Partien von Wareneinheiten geeignet ist, die in vertikalen Stapeln innerhalb einer Arbeitsfläche übereinander geschichteten Wareneinheiten entnommen werden. Der Roboter besitzt hierbei eine vertikal bewegbare Greifvorrichtung, die den Roboter dazu befähigt, Wareneinheiten oben von ausgewählten Stapeln zu entnehmen und / oder derartige Einheiten oben auf ausgewählten Stapeln abzusetzen.

Zur Erfüllung ihrer Aufgabe ist dieses Robotersystem dadurch gekennzeichnet, dass die Greifvorrichtung eine vertikal bewegbare turmähnliche Lastaufnahmevorrichtung, die einen Lastraum zur Aufnahme gestapelter Wareneinheiten definiert, sowie Greifmittel am unteren Ende der Lastaufnahmevorrichtung umfasst, wobei die Lastaufnahmevorrichtung in der vertikalen Richtung so dimensioniert ist, dass sie mehrere Wareneinheiten aufnehmen und umschließen kann, die allgemein vertikal oben auf einer von den Greifmittel gehaltenen untersten Wareneinheit getragen werden.

Die Greifvorrichtung ist durch Steuerung ihrer vertikalen Bewegung in der Lage, selektiv mindestens eine Wareneinheit einem vertikalen Stapel von Wareneinheiten zu entnehmen oder selektiv mindestens eine Wareneinheit einem vertikalen Stapel von Wareneinheiten zuzuführen.

Hierdurch wird erreicht, dass die Anzahl und Zusammensetzung von Wareneinheiten in einer Partie von Wareneinheiten, die vom Roboter entnommen und einer Entladungsstelle zugeführt werden, gemäß einem voreingestellten Befehl frei ausgewählt und variiert werden können.

Aus der DE 601 04 926 T2 ist eine Güterumschlagsanordnung für Gütereinheiten bekannt, welche einen Lagerbereich für Gütereinheiten und einen Ladebereich für Gütereinheiten in direkter Nähe zueinander und ein Robotersystem umfasst, welches einen in dem Lagerbereich bewegbaren Aufnahmeroboter für Gütereinheiten umfasst. Ferner weist diese Güterumschlagsanordnung ein Bewegungssystem für Transferstapelreihen auf, um durch den Aufnahmeroboter gebildete Transferstapelreihen zu bewegen, in welcher Anordnung der Arbeitsbereich des Aufnahmeroboters für Gütereinheiten eingerichtet ist, um bis zu dem Lagerbereich zu reichen.

Bei dieser bekannten Anordnung sollen Behinderungen und Probleme des Standes der Technik und die Zeit für manuelle Arbeit minimiert werden.

Hierzu soll unter Schutz gestellt werden, dass der Arbeitsbereich des Bewegungssystems für die Transferstapelreihen eingerichtet ist, um sowohl den Lagerbereich für Gütereinheiten als auch den Ladebereich für Gütereinheiten zu erreichen.

In der den Oberbegriff des unabhängigen Vorrichtungsanspruchs bildenden Druckschrift US 2008/131255 A1 sind eine Vorrichtung und ein Verfahren beschrieben, mit dem die Wirksamkeit der Palettierung vermischter Produkte erhöht wird.

Die US 4 538 950 A beschreibt eine automatische Förderanlage zum Transportieren von Werkstücken in einer Maschinenwerkstatt.

Die EP 1 535 864 A2 betrifft ein Verfahren zum Lagern von Produkten und ein Lagersystem.

In JP 6 086 470 A ist ein Batterie-Ladegerät für einen Gabelstapler beschrieben.

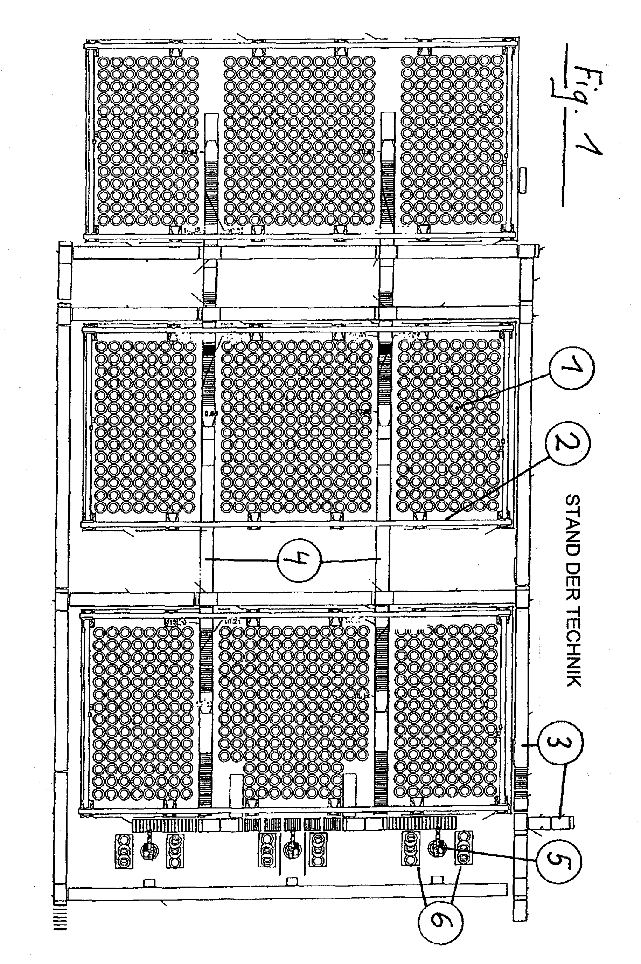

Eine weitere Vorrichtung aus dem Stand der Technik ohne druckschriftlichen Nachweis ist in der Fig. 1 dargestellt. Diese Vorrichtung ist, wie aus den von oben erkennbaren zahlreichen Stapeln von runden Symbolen für Fahrzeugreifen zu erkennen ist, speziell zur Lagerung von Fahrzeugreifen konstruiert. Mit 1 ist hierbei eines der gezeigten neun Felder von Reifen gekennzeichnet. In der Mitte dieser Felder ist mit 2 einer der verwendeten, über das betreffende Operationsgebiet verfahrbaren, Brückenkräne mit seinen Greifvorrichtungen zum Erfassen der Reifen jeweils von der Oberseite der betreffenden Stapel, zu erkennen. Die Zulieferung der Reifen von der Produktionslinie erfolgt hierbei mittels der beiden gezeigten Anlieferungswege 3. Diese können aus Mitteln bestehen, die einem Förderband ähnliche Funktionen aufweisen.

Die Abtransportwege 4 zur Palettenbefüllung einer Kommission verlaufen, wie gezeigt, in üblicher Weise auf den beiden mittleren längs verlaufenden Bahnen. Mittels der im rechten Bildteil dargestellten drei Stapelrobotern 5 erfolgt die Befüllung der Paletten 6 einer zu liefernden Kommission.

In dieser Darstellung nicht zu erkennen ist die Art und Weise in der die Greifvorrichtung eines Brückenkrans 2 jeweils die Reifen von oben erfasst. Hier kommt eine Greifvorrichtung zum Einsatz, die von oben in den gewünschten Stapel eintaucht und mittels von innen sich auseinander bewegender krallenähnlicher Vorrichtungen den betreffenden Reifen ergreift. Das anschließende Absetzen des betreffenden Reifens erfolgt in umgekehrter Reihenfolge.

Die einzelnen Reifenstapel stehen bei dieser Vorrichtung, wie in der Fig.1 gut zu erkennen ist, dicht gedrängt aneinander.

Als Hauptnachteil dieser Art der Lagerung hat sich in der Praxis erwiesen, dass die einzelnen Reifenstapel wegen ihrer dichten Packung sich gegenseitig beeinflussen und zum Beispiel im Falle unterschiedlicher Packungshöhe innerhalb des Verbundes umfallen können. In diesem Fall ist die somit verursache Unordnung nur mittels stundenlanger Ordnungsarbeit manueller Hilfskräfte zu reparieren. Eine dadurch verursachte Unterbrechung eines laufenden Produktionsprozesses und eines gleichzeitig stattfindenden Kommissionsprozesses ist nicht tragbar und verursacht hohe Kosten.

Es ist daher die Aufgabe der vorliegenden Erfindung eine Vorrichtung und ein Verfahren zum definierten Zwischenlagern und Kommissionieren produzierter Waren gleicher Art aber unterschiedlicher Größe zu schaffen, die es ermöglichen den Lagerungsvorgang schnell und sicher auszuführen und gleichzeitig eine reibungslose Kommissionierung der benötigten Ware zu ermöglichen.

Diese Aufgabe wird durch die Vorrichtung nach Anspruch 1, bzw. das Verfahren nach Anspruch 7 gelöst.

Im Wesentlichen besteht diese Lösung darin, dass die Waren über spezielle Transportfahrzeuge und mittels einer besonderen technischen Ausstattung in der Weise befördert werden, dass der zeitliche Aufwand ein Minimum und die Sicherheit ein Maximum erreichen.

Weitere Ausgestaltungen der Erfindung ergeben sich aus den Unteransprüchen.

Die erfindungsgemäße Vorrichtung wird im Folgenden näher beschrieben. Es zeigen im Einzelnen:
- Figur 1:: eine Draufsicht auf eine Vorrichtung nach dem Stand der Technik
- Figur 2:: eine Draufsicht auf die erfindungsgemäße Vorrichtung
- Figur 3:: eine nähere Draufsicht der Fig.2
- Figur 4:: eine nähere Darstellung der Zusammenstellung einer Kommission
- Figur 5:: eine Seitenansicht einer Stapel-Lafette
- Figur 6:: eine Seitenansicht eines Transportfahrzeugs mit einer Stapel-Lafette

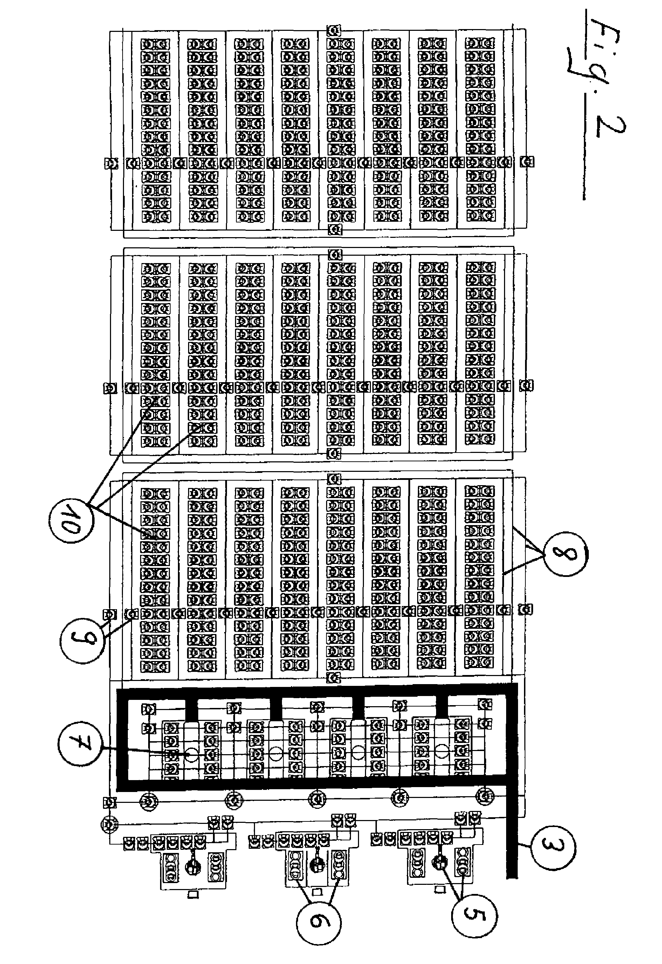

Ebenso wie in der Fig. 1 ist bei der erfindungsgemäßen Vorrichtung in der Draufsicht der Fig. 2 der Anlieferungsweg 3 der von der Produktionslinie gelieferten Waren in der rechten oberen Ecke zuerkennen. Hierbei kann es sich um Rollenförderer oder ähnliche Transportmittel handeln. Der dunkel gekennzeichnete Anlieferungsweg 3 beschreibt hier eine Bahn die im Wesentlichen für diese Waren als Laufband ein in sich geschlossenes Rechteck beschreibt, wobei der gesamte Anlieferungsweg 3 auf einer erhöhten Ebene verläuft der den später beschriebenen Stapel - Lafetten erlaubt unter dem Anlieferungsweg 3 hindurch zu fahren. Dies ist in der Draufsicht der Fig. 2 nicht zu erkennen.

Eine gesonderte Darstellung dieses einfachen Sachverhalts erscheint nicht notwendig.

Im Bereich des Anlieferungswegs 3 sind auf der linken Seite vier Übergabestellen in der Form kurzer, vom Anlieferungsweg 3 abzweigender Teilstücke dargestellt. Diese Teilstücke dienen der gezielten Ausleitung von Waren die im Zuge der von der Produktionslinie gelieferten Waren den Anlieferungsweg 3 erreichen. Die jeweilige Ausleitung erfolgt dadurch, dass die betreffende Ware durch mechanische Mittel, die zum Beispiel durch den transportierenden Rollenförderer hindurchtreten, vom Anlieferungsweg 3 abgehoben wird und auf das gewünschte Teilstück befördert wird. Auf vergleichbare Weise kann auch die ihre Richtung ändernde Weiterleitung der Waren an den "Ecken" des gezeigten Anlieferungswegs 3.erfolgen. Es können natürlich auch kurvenstücke " verbaut werden. Die hierbei angewendete Technik ist dem Fachmann bekannt.

Zur Steuerung der Ausleitung der gewünschten Waren an den gewünschten Ausleitungsstellen in den Bereichen der betreffenden Stapelroboter 7, dienen Sensoren. Diese, hier der Übersichtlichkeit wegen, nicht dargestellten Sensoren können beispielsweise als Barcode - Leser oder RFID -Transponder ausgebildet sein.

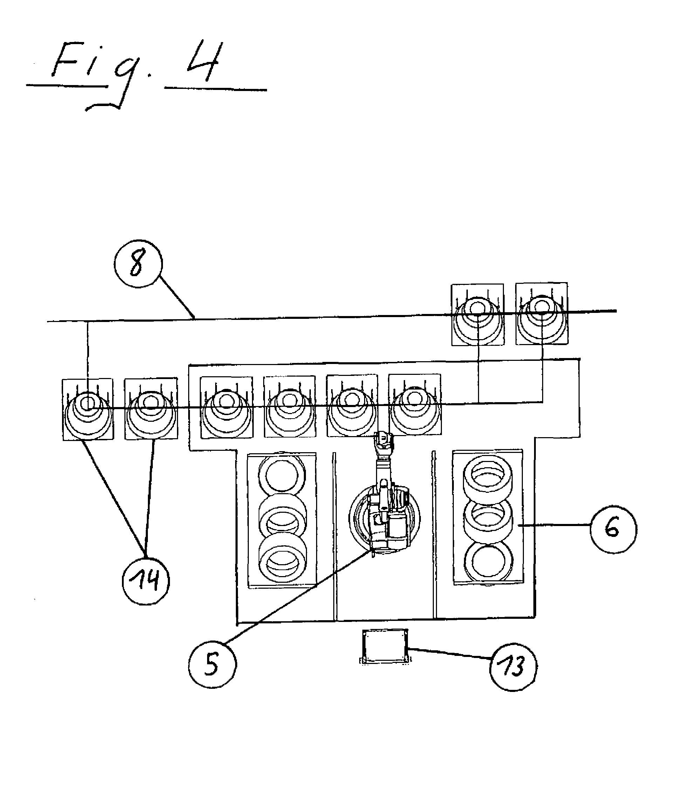

Die auf den gezeigten vier Übergabestellen des Anlieferungswegs 3 gelandeten Waren werden dann von einem der, hier gezeigten, vier Stapelroboter 7 zur Befüllung von später in der Figur 4 beschriebenen Stapel - Lafetten 14 verwendet.

Zusätzlich zu den in der Figur 2 gezeigten vier Übergabestellen des Anlieferungswegs 3 können an der gegenüber liegenden Seite bei entsprechendem Bedarf weitere solcher Übergabestellen vorgesehen sein.

Die Stapel - Lafetten 14 werden mittels Transportfahrzeugen 18 befördert die sich unter die Stapel - Lafetten 14 schieben können und sich mit diesen mittels einer speziellen Kupplung verbinden.

Die Transportfahrzeuge 18 werden in Verbindung mit einer Stapel - Lafette 14 mit 9 bezeichnet.

Zwei solcher Transportfahrzeuge 9 mit geführten Stapel - Lafetten sind am unteren Rand der Figur 2 beispielhaft als besondere Flächenstücke gekennzeichnet. Es ist ersichtlich, dass es sich in der Figur 2 bei allen von oben gezeigten derartigen Flächenstücken um solche Transportfahrzeuge 9 mit geführten Stapel - Lafetten 14 handelt, da sich diese auf einer Induktionsschleife 8 befinden. Abgestellte Stapel - Lafetten 14 erscheinen von oben gesehen jedoch auf die gleiche Weise, da ein evtl. vorhandenes Transportfahrzeug 18 von oben nicht zu erkennen ist.

Die Transportfahrzeuge 18 werden mittels im Boden verlegter Induktionsschleifen 8 mit elektrischer Energie versorgt ( vgl. oberer Rand der Fig.2 ) und gleichzeitig hinsichtlich ihrer Bewegung gesteuert.

Die Induktionsschleifen 8 dienen der berührungslosen Übertragung von Energie auf die Transportfahrzeuge 18 mittels elektromagnetischer induktion ( Michael Faraday, 1831 ). Auf diese Weise erhalten die Transportfahrzeuge 18 nicht nur die elektrische Stromversorgung für ihren Antrieb sondern auch über ein spezielles Bussystem die für ihre gezielte Bewegung und Positionierung notwendigen Steuerungsimpulse. Anstelle des beschriebenen Systems von Induktionsschleifen 8 können solche Transportfahrzeuge 9 jedoch auch mittels der Energieversorgung durch Akkumulatoren betrieben werden, wobei die Steuerung ihrer Bewegung über streifenförmige Informationsmittel auf der Bodenfläche in der Art von Bar - Codes erfolgt. Mittels solcher Bar - Code -Streifen ist es einem Transportfahrzeug möglich an jeder Stelle seinen Aufenthaltsort über ein im Fahrzeug installiertes Lesegerät zu bestimmen. Eine solche Art und Weise der Energieversorgung und der Steuerung der Bewegung von Transportfahrzeugen 9 ist kostengünstiger herzustellen als die Installation von Induktionsschleifen 8.

Anstelle der beschriebenen Bar - Code - Streifen sind auch andere Wegmarkierungen für die Orientierung von Transportfahrzeugen wie bekannte Funkleit - Systeme denkbar.

Mit 10 sind in der Figur 2 beispielhaft drei Stellplätze für Stapel - Lafetten 14 bezeichnet.

Gleichzeitig mit der Befüllung des Warenlagers, das auf der linken Seite beispielhaft aus 24 Reihen von jeweils 28 Stellplätzen 10 bestehend dargestellt ist, kann die Zusammenstellung von Kommissionen zuliefernder Waren erfolgen.

Dies ist durch einen, von insgesamt drei gezeigten, mit 5 bezeichneten Stapelroboter zur Palettenbefüllung einer Kommission auf der rechten Seite der Figur 2 gekennzeichnet. Weiter sind zusätzlich zwei Kommissionspaletten 6 besonders kenntlich gemacht. Die Kommissionspaletten 6 werden auf normalem Weg, etwa mit Gabelstaplern zum Versand an Lastkraftwagen oder dergl. gebracht.

Die Greifwerkzeuge der Stapelroboter 5 und 7 sind den jeweils produzierten Waren angepasst. Deren Ausgestaltung ist dem Fachmann geläufig.

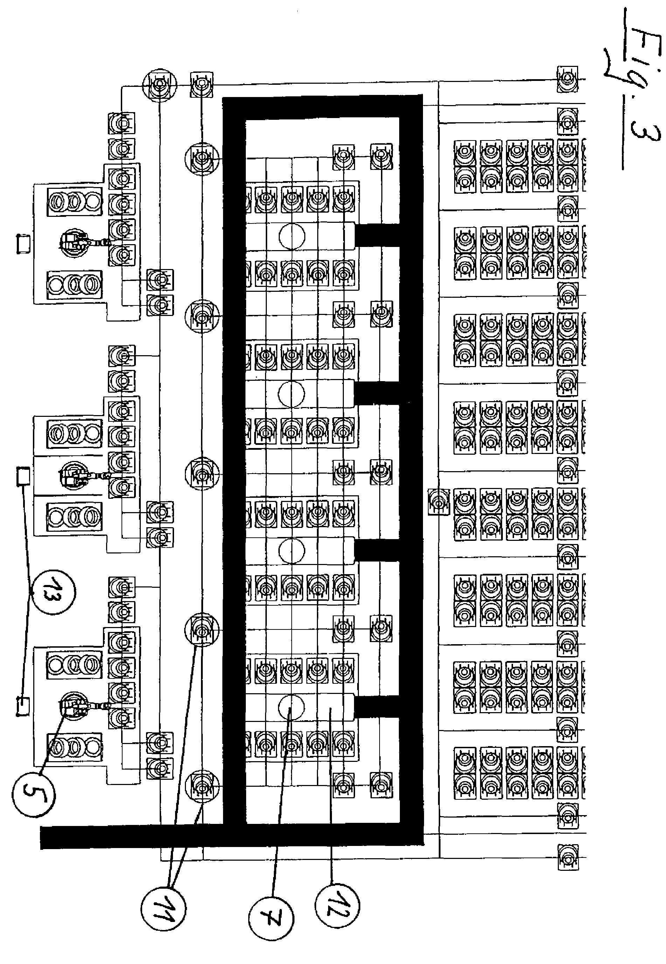

Die Fig. 3 zeigt eine nähere Draufsicht der Fig.2, nämlich den Bereich des in der Art eines Rechtecks dargestellten Anlieferungsweg 3. Hier sind wiederum vier eingezeichnete Stapelroboter 7 gezeigt, von denen der rechte gesondert bezeichnet ist. In diesem Beispiel ist mit 12 der für seine Funktion benötigte Fahrweg des Stapelroboters 7 zur Befüllung der Stapel - Lafetten 14 bezeichnet. Anstelle der Stapelroboter 7 können auch entsprechen gestaltete Flächenportale Verwendung finden.

Für den Wechsel eines Transportfahrzeugs 18 in den Bereich einer anderen Induktionsschleife 8 können die Drehplätze 11 vorgesehen sein.

Da in diesem Fall die Möglichkeit besteht, dass die Energieversorgung des jeweiligen Transportfahrzeugs 18 kurzfristig unterbrochen werden kann, weisen die Transportfahrzeuge 18 einen ausreichend dimensionierten Akkumulator auf, der für eine bestimmte Überbrückungszeit die Versorgung mit elektrischer Energie sicherstellt. Dies gilt nicht nur für die Sicherstellung der Möglichkeit der Fortbewegung sondern auch für die Sicherstellung der datentechnischen Erreichbarkeit. Während des normalen Fahrbetriebs ist sichergestellt, dass der jeweilige Akkumulator stets voll aufgeladen wird.

Anstelle der funktionsmäßigen Verwendung der Drehplätze 11 besteht auch die Möglichkeit über die Detektion der Umdrehungszahl der verschiedenen Räder eines Transportfahrzeugs und deren unterschiedlichen Steuerung diese eine Kehrtwende beschreiben zu lassen.

Für die Palettenbefüllung einer gleichzeitig stattfindenden Zusammenstellung einer Kommission ist hier, wie in der Fig.1 und 2, ein Stapelroboter 5 gekennzeichnet. Zusätzlich sind in der Fig.3 zwei der Steuerstände bzw. Kontrollstände 13 bezeichnet.

In der Fig. 4 ist eine nähere Darstellung der Zusammenstellung einer Kommission gezeigt. Neben der für diesen Bereich zuständigen Induktionsschleife 8, dem in der Draufsicht detaillierter heraus gezeichneten Stapelroboter 5 und dem betreffenden Steuerstand 13 ist eine der beiden erkennbaren Kommissionspaletten 6 gekennzeichnet. Im linken Bereich der Fig.4 sind zwei Stapel - Lafetten 14 besonders gekennzeichnet.

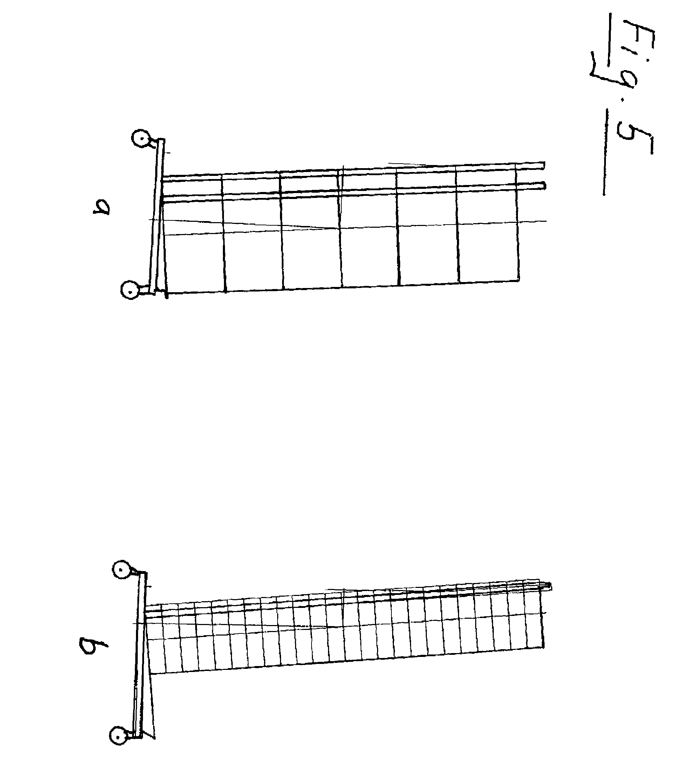

Fig. 5 zeigt eine stilisierte Seitenansicht einer Stapel - Lafette 14.

Es ist hier zu sehen, dass die Auflagefläche einer Stapel - Lafette 14 eine geneigte untere Auflagefläche aufweist, um eine definierte Lage des jeweiligen Warenstapels zu erreichen. Im Fall a) sind zum Beispiel nur sechs großvolumige Fahrzeugreifen auf der der Palette gestapelt, im Fall b) dagegen mehrere kleinere Fahrzeugreifen. Die Stapelstützen, an die sich die Reifenstapel anlehnen, sind jeweils auf der linken Seite dargestellt. Erkennbar sind in dieser Darstellung nur die jeweils sichtbare hintere und die vordere Stapelstütze.

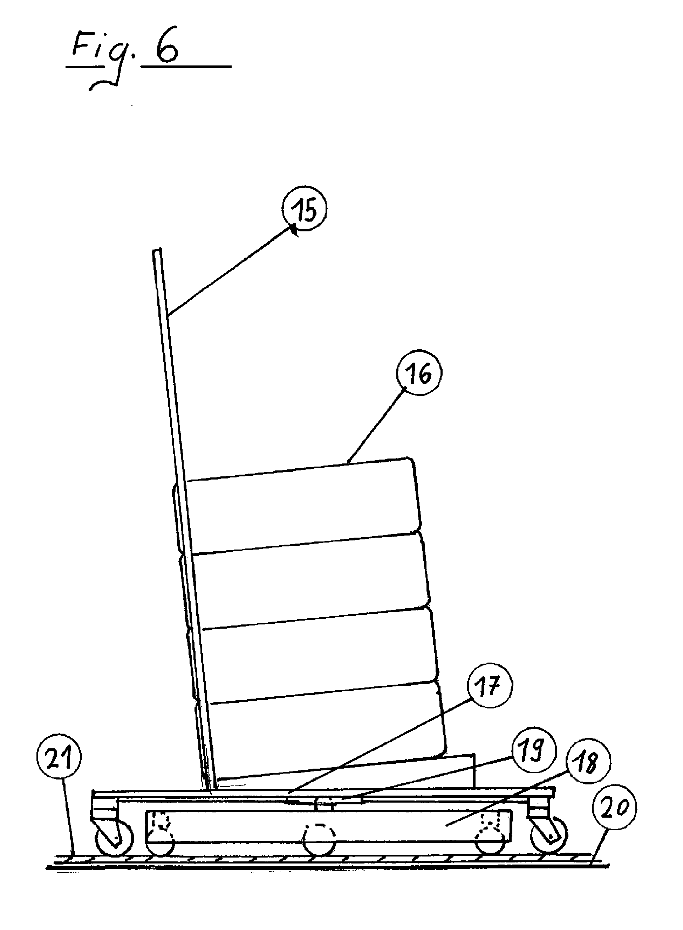

Die Fig. 6 zeigt eine Seitenansicht eines Transportfahrzeugs 18 mit einer Stapel - Lafette. Besonders gekennzeichnet sind hier die hintere Stapelstützen 15 und der obere Reifen des Stapels mit 16. Die eigentliche ebene Plattform der gezeigten Stapel - Lafette ist mit 17 bezeichnet.

Ein Transportfahrzeug 18 kann einen, hier nicht gesondert dargestellten, berührungslos wirkenden Abstandssensor aufweisen, der, neben der erfindungsgemäßen Steuerung, die Betriebssicherheit erhöht.

Das eigentliche Transportfahrzeug 18 ist mittels einer Kupplung 19 mit der Plattform 17 der Stapel - Lafette 14 mittels eines zur Kupplung 19 passenden Gegenstücks verbunden.

Im Bodenbereich 21 ist eine Induktions - Leitung 20 angedeutet.

Die in der Fig. 6 gezeigte Stapel - Lafette 14 weist vier so genannte Schleppräder auf. Das bedeutet, dass die Stapel - Lafette 14 bei einer Bewegung, woher auch immer veranlasst, sich in die Richtung bewegt aus der die Kraft zur Bewegung kam da die gezeigten Räder sofort in die Richtung einschwenken in die die Bewegung führt. Da leichte Bodenunebenheiten nie auszuschließen sind und andererseits im Zwischenlager definiert abgestellte Stapel - Lafetten 14 auch bei leichten Stößen einen festen Stand haben müssen, ist mittels einer auf alle vier Räder wirkenden, sich beim Wegfahren eines Transportfahrzeugs 18 sich automatisch aktivierender, Standbremse sichergestellt, dass eine abgestellte Stapel - Lafette 14 sicher steht und stehen bleibt.

Eine kostengünstigere Möglichkeit die Position eines Transportfahrzeugs 18 zu fixieren besteht darin, an den vorgesehenen Standplätzen Anschlagleisten zu installieren die einen bestimmten Standplatz definieren.

Da bei dem Darunterfahren eines Transportfahrzeugs 18 unter eine abgestellte Stapel - Lafette 14 die beschriebene Standbremse gelockert werden muss, wird bei dem Einrasten einer Kupplung 19 in das an der Stapel - Lafette 14 befindliche Gegenstück sichergestellt, dass sich die Standbremse lockert.

In die Kupplung 19 ist weiterhin ein Gewichts - Sensor integriert, der auf Anforderung oder beständig, mittels eines Bus -Systems oder per Funk, die auf die Kupplung einwirkende Last registriert. Das ermöglicht der zentralen Steuerung einerseits eine redundante Möglichkeit der Überprüfung ob die Anzahl und die Art der auf der betreffenden Stapel - Lafette 14 befindlichen Waren im Wesentlichen mit dem von dem Kupplungs - Sensor ermittelten Gewicht übereinstimmen. Andererseits ist auf diese Weise sichergestellt, dass niemals ein Transportfahrzeug 18 überlastet wird. Eine weitere Möglichkeit der Steuerung der Transportfahrzeuge 18 besteht beispielhaft darin, im Bereich des ursprünglichen Operationsgebiets zusätzlich mittels eines GPS -ähnlichen Systems eine Funkverbindung zu jedem im Einsatz befindlichen Transportfahrzeug 18 ( zusätzlicher Sende - Empfänger notwendig ) herzustellen. Bekanntermaßen reichen für eine erfolgreiche Triangulation drei entsprechend dimensionierte Sendestationen mit unterschiedlichen Sendefrequenzen, im Operationsgebiet. In der Praxis wird man mehr als drei gut verteilte Sendestationen verwenden um eine sichere Erreichbarkeit aller Transportfahrzeuge 18 auch bei drohenden funktechnischen Abschattungen zu erreichen.

Diese beispielhafte Enrueiterung der steuerungstechnischen Möglichkeiten des erfindungsgemäßen Lagerungs - und Kommissionierungsverfahrens ergänzt einerseits die sicherheitstechnischen Möglichkeiten und eröffnet aber andererseits eine völlig neuartige Möglichkeit der Zukunftsplanung.

Denn im Falle einer unerwarteten drohenden Kapazitätserhöhung besteht mittels dieses GPS ähnlichen Systems die Möglichkeit sofort das bestehende Lager zu erweitern sofern nur eine ausreichende Überdachung gewährleistet ist. Eine erhöhte Kapazität der Akkumulatoren der Transportfahrzeuge 18 und die Installation entsprechender Sendestationen schafft sofort die Möglichkeit eine gewünschte Lagererweiterung ohne dass erst zusätzliche Induktionsleitungen verlegt werden müssen. Für diesen Fall ist jedoch noch ein besonderer Steuerstand 13 erforderlich.

Die Steuerung der komplexen Bewegungsvorgänge und die Signalverarbeitung der verwendeten Sensoren erfordern ein spezielles Steuerungsprogramm.

### Bezugszeichenliste

- 1: Lagerplatz für Reifen
- 2: Brückenkrahn mit Greifvorrichtung
- 3: Anlieferungsweg der Produktionslinie
- 4: Abtransportweg zur Palettenbefüllung einer Kommission
- 5: Stapelroboter zur Palettenbefüllung einer Kommission
- 6: Kommissionspaletten
- 7: Stapelroboter für die Befüllung von Lafetten
- 8: Induktionsschleifen
- 9: Transportfahrzeug mit geführten Stapel - Lafetten
- 10: Stellplätze für Stapel - Lafetten
- 11: Drehplatz für Transportfahrzeuge 18,9
- 12: Fahrweg eines Stapelroboters 7
- 13: Steuerstand, Kontrollstand
- 14: Stapel - Lafette
- 15: Stapel - Stütze
- 16: Reifen
- 17: Plattform einer Stapel - Lafette
- 18: Transportfahrzeug
- 19: Kupplung
- 20: Induktions - Leitung
- 21: Fahrboden

## Patentansprüche

1. Vorrichtung zum definierten Zwischenlagern produzierter Waren gleicher Art aber unterschiedlicher Größe und zum gleichzeitigen Zusammenstellen von Kommissionen dieser Waren, mit den folgenden Merkmalen:
a) einen Anlieferungsweg (3) zur laufenden Beförderung der produzierten Produkte in den Bereich von Stapelrobotern (7),
b) einer Vielzahl von Transportfahrzeugen (18) zum Transport von Stapel-Lafetten (14),
c) einer Vielzahl von Stellplätzen (10) für Stapel-Lafetten (14),
d) einen oder mehrere Stapelroboter (5) zur Befüllung von Kommissions-Paletten (6),
**dadurch gekennzeichnet, dass**
e) eine Mehrzahl von Induktions-Leitungen (20) zur Stromversorgung und Steuerung der Transportfahrzeuge (18, 9) vorhanden ist,
f) dass Transportfahrzeuge (18) bauartbedingt unter eine Stapel-Lafette (14) verfahrbar sind und an der Oberseite eine Kupplung (19) aufweisen, mit der sie mittels eines Gegenstücks an der Lafette (14) mit dieser fest verbindbar sind,
g) dass die Transportfahrzeuge (18, 9) einen berührungslos detektierenden Abstandssensor und einen Akkumulator zur überbrückenden Stromversorgung aufweisen und dass die Kupplung (19) bei dem Verbinden mit dem Gegenstück der Stapel-Lafette (14) einen Mechanismus aufweist, der ein, an dieser im Stand wirkendes, automatisches Bremssystem automatisch löst,
h) dass die Stapel-Lafetten (14) eine leicht gegen die Bodenfläche geneigte Auflagefläche und diese Auflagefläche an der niedrigsten Stelle eine oder mehrere Stapelstützen (15) aufweist.

2. Vorrichtung nach Anspruch 1,
**dadurch gekennzeichnet,**
**dass** es sich bei den produzierten Waren um Fahrzeugreifen handelt.

3. Vorrichtung nach einem der vorhergehenden Ansprüche,
**dadurch gekennzeichnet,**
**dass** auf den Fahrwegen der Transportfahrzeuge (18) Codeschienen eingesetzt werden, die zur Positionsbestimmung von Lichtschranken abgetastet werden.

4. Vorrichtung nach einem der vorhergehenden Ansprüche,
**dadurch gekennzeichnet,**
**dass** die Induktions-Leitungen (20) Kreuzungsstellen (11) aufweisen, an denen ein Wechsel zwischen den einzelnen Leitungsbereichen möglich ist.

5. Vorrichtung nach einem der vorhergehenden Ansprüche,
**dadurch gekennzeichnet,**
**dass** im Bereich des Anlieferungswegs (3) zur Richtungsänderung der beförderten Waren Mittel vorgesehen sind, die eine Identifizierung der Waren mittels Sensoren, ein Anheben der Waren und ein Weiterleiten in eine, von der ursprünglichen Richtung verschiedene, Richtung ermöglichen.

6. Vorrichtung nach einem der vorhergehenden Ansprüche,
**dadurch gekennzeichnet,**
**dass** durch ein zusätzliches Steuerungssystem der Transportfahrzeuge (18) mittels einer Mehrzahl an zusätzlichen Sendestationen unterschiedlicher Sendefrequenz und an jedem Transportfahrzeug (18) zusätzlich installierte Sende-Empfänger nach der Art eines GPS-Systems die Betriebssicherheit erhöht wird.

7. Verfahren zum definierten Zwischenlagern produzierter Waren gleicher Art aber unterschiedlicher Größe und zum gleichzeitigen Zusammenstellen von Kommissionen dieser Waren mit den folgenden Merkmalen:
a) die produzierten Waren werden über einen Anlieferungsweg (3) einer Mehrzahl von Übergabestellen zugeführt, die im Bereich von Stapelrobotern (7) für die Befüllung von Stapel-Lafetten (14) liegen,
b) die Stapelroboter (7) dienen der Befüllung einer Vielzahl von Stapel-Lafetten (14), die mittels Transportfahrzeugen (18) zu einer Vielzahl von Stellplätzen (10) verbracht werden, wobei beim Darunterfahren eines Transportfahrzeugs unter die Stapel-Lafette (14) eine Kupplung (19) einrastet in ein an der Stapel-Lafette (14) befindliches Gegenstück, wodurch sich ein an der Stapel-Lafette (14) im Stand wirkendes, automatisches Bremssystem automatisch löst,
c) die Energieversorgung der Transportfahrzeuge (18) erfolgt über Induktions-Leitungen (20), wobei gleichzeitig auch die Zielführung, Positionsbestimmung und Positionierung über ein Datenbus-System mittels der Induktions-Leitungen gesteuert wird, und wobei die Stromversorgung mittels eines aufladbaren Akkumulators unterstützt wird, und wobei an Kreuzungsstellen (11) ein Wechsel zwischen verschiedenen Leitungsbereichen ermöglicht wird,
d) gleichzeitig zum Anfahren der Stellplätze (10) werden mittels einer Mehrzahl von Stapelrobotern (5) von hierfür aus dem Zwischenlager beorderten Stapel-Lafetten (14) Kommissions-Paletten (6) zum Versand gefüllt.

8. Verfahren nach Anspruch 7,
**dadurch gekennzeichnet,**
**dass** anstelle der Induktionsleitungen (20) auf den Fahrwegen
der Transportfahrzeuge (18) Codeschienen eingesetzt werden, die zur Zielführung, Positionsbestimmung und Positionierung von Lichtschranken abgetastet werden, und dass ein Wechsel zwischen verschiedenen Leitungsbereichen mittels definierten Drehungen der Transportfahrzeuge (18) erfolgt, die mittels der Erfassung der Umdrehungszahl der Räder und deren unterschiedlichen Steuerung bewirkt werden.

9. Verfahren nach einem der Ansprüche 7 oder 8,
**dadurch gekennzeichnet,**
**dass** im Bereich des Anlieferungswegs (3) zur Richtungsänderung der beförderten Waren Mittel vorgesehen sind, die ein Anheben der Waren und ein Weiterleiten in eine, von der ursprünglichen Richtung verschiedene, Richtung ermöglichen.

10. Verfahren nach einem der Ansprüche 7 bis 9,
**dadurch gekennzeichnet,**
**dass** durch ein zusätzliches Steuerungssystem der Transportfahrzeuge (18) mittels einer Mehrzahl an zusätzlichen Sendestationen unterschiedlicher Sendefrequenz und an jedem Transportfahrzeug (18, 9) zusätzlich installierte Sende-Empfänger nach der Art eines GPS-Systems die Lagerkapazität und die Betriebssicherheit erhöht wird.

## Claims

1. Apparatus for the defined intermediate storage of produced articles of the same type but different size and for the simultaneous composition of consignments of said articles, said apparatus having the following features:
a) a delivery path (3) for conveying the produced products continuously into the region of stacking robots (7),
b) a multitude of transport vehicles (18) for transporting stacking pallet trolleys (14),
c) a multitude of storage locations (10) for stacking pallet trolleys (14),
d) one or several stacking robots (5) for filling order-picking pallets (6),
**characterized**
e) **in that** a plurality of induction lines (20) for power supply and control of the transport vehicles (18, 9) are present,
f) **in that** transport vehicles (18) are designed to be able to travel under a stacking pallet trolley (14) and on the upper surface have a coupling (19) by way of which they are fixedly connectable to the trolley (14) by means of a counterpart on said trolley,
g) **in that** the transport vehicles (18, 9) have a non-contactlessly detecting distance sensor and a storage battery for bridging the power supply and in that, when connecting to the counterpart of the stacking pallet trolley (14), the coupling (19) has a mechanism which automatically triggers an automatic braking system which works on said stacking pallet trolley when stationary,
h) **in that** the stacking pallet trolleys (14) have a bearing surface which is slightly inclined toward the surface of the floor and said bearing surface has one or more stacking supports (15) at the lowest point.

2. Apparatus according to Claim 1, **characterized in that** the produced articles are vehicle tyres.

3. Apparatus according to one of the preceding claims, **characterized in that** code rails, which are scanned for determining the position of photoelectric barriers, are used along the travel paths of the transport vehicles (18).

4. Apparatus according to one of the preceding claims, **characterized in that** the induction lines (20) have crossing points (11) at which a change between the individual line regions is possible.

5. Apparatus according to one of the preceding claims, **characterized in that**, to change the direction of the conveyed articles, means are provided in the region of the delivery path (3) which enable the articles to be identified by means of sensors and the articles to be lifted and forwarded in a direction which is different from the original direction.

6. Apparatus according to one of the preceding claims, **characterized in that** the operating reliability is increased by means of an additional control system for the transport vehicles (18) by means of a plurality of additional transmitting stations with a different transmitting frequency and on each transport vehicle (18) additionally installed transmitter-receivers in the manner of a GPS system.

7. Method for the defined intermediate storage of produced articles of the same type but different size and for the simultaneous composition of consignments of said articles, said method having the following features:
a) the produced articles are supplied by means of a delivery path (3) to a plurality of transfer points which are located in the region of stacking robots (7) for filling stacking pallet trolleys (14),
b) the stacking robots (7) serve for filling a multitude of stacking pallet trolleys (14) which are moved by means of transport vehicles (18) to a multitude of storage locations (10), wherein, when a transport vehicle moves underneath the stacking pallet trolley (14), a coupling (19) latches into a counterpart located on the stacking pallet trolley (14), whereby an automatic braking system which works on the stacking pallet trolley (14) when stationary is automatically triggered,
c) energy is supplied to the transport vehicles (18) by means of induction lines (20), wherein at the same time the guiding, positional determining and positioning are also controlled by a data bus system by means of the induction lines, and wherein the power supply is assisted by means of a chargeable storage battery, and wherein a change between different line regions is made possible at crossing points (11),
d) at the same time as approaching the storage locations (10), order-picking pallets (6) are filled for dispatch by means of a plurality of stacking robots (5) from stacking pallet trolleys (14) conveyed for this purpose from the intermediate store.

8. Method according to Claim 7, **characterized in that**, in place of the induction lines (20) on the travel paths of the transport vehicles (18), use is made of code rails which are scanned for the guiding, positional determining and positioning of photoelectric light barriers and **in that** a change between different line regions is effected by means of defined rotations of the transport vehicles (18) which are brought about by detecting the speed of the wheels and their different control.

9. Method according to either of Claims 7 and 8, **characterized in that**, to change the direction of the conveyed articles, in the region of the delivery path (3) means are provided which enable the articles to be lifted and forwarded in a direction which is different to the original direction.

10. Method according to one of Claims 7 to 9, **characterized in that** the storage capacity and operating reliability are increased by means of an additional control system for the transport vehicles (18) by means of a plurality of additional transmitting stations with a different transmitting frequency and on each transport vehicle (18, 9) additionally installed transmitter-receivers in the manner of a GPS system.

## Revendications

1. Ensemble pour entreposer temporairement de manière définie des marchandises de même type mais de tailles différentes après leur production et pour composer en même temps des colis constitués de ces marchandises, l'ensemble présentant les caractéristiques suivantes :
a) un parcours de livraison (3) qui amène en permanence au voisinage de robots d'empilement (7) les produits qui ont été fabriqués,
b) plusieurs véhicules de transport (18) qui transportent des supports (14) d'empilement,
c) plusieurs emplacements (10) pour les supports (14) d'empilements,
d) un ou plusieurs robots d'empilement (5) qui remplissent des palettes (6) de colis,
**caractérisé en ce que**
e) l'ensemble présente plusieurs conducteurs (20) à induction qui alimentent en courant et qui commandent les véhicules de transport (18, 9),
f) **en ce que** du fait de leur structure, les véhicules de transport (18) peuvent être déplacés en dessous d'un support (14) d'empilement et présentent sur le côté supérieur un accouplement (19) par lequel ils peuvent être reliés solidairement aux supports (14) au moyen d'une pièce complémentaire prévue sur cette dernière,
g) **en ce que** les véhicules de transport (18, 9) présentent une sonde de distance à détection sans contact et un accumulateur qui assure la continuité de l'alimentation en courant, **en ce que** l'accouplement (19) présente pour la liaison à la pièce complémentaire du support (14) d'empilement un mécanisme qui déclenche automatiquement un système automatique de freinage qui agit sur ce support à l'arrêt,
h) **en ce que** les supports (14) d'empilement présentent une surface de pose légèrement inclinée par rapport à la surface du sol et **en ce que** cette surface de pose présente un ou plusieurs appuis d'empilement (15) en son emplacement le plus bas.

2. Ensemble selon la revendication 1, **caractérisé en ce que** les marchandises fabriquées sont des bandages pneumatiques pour roues de véhicule.

3. Ensemble selon l'une des revendications précédentes, **caractérisé en ce que** des rails de codage qui sont palpés par des barrières lumineuses pour la détermination de position sont utilisés sur les parcours de déplacement des véhicules de transport (18).

4. Ensemble selon l'une des revendications précédentes, **caractérisé en ce que** les conducteurs (20) à induction présentent des emplacements de croisement (11) sur lesquels un échange entre les différentes parties du conducteur est possible.

5. Ensemble selon l'une des revendications précédentes, **caractérisé en ce que** des moyens qui permettent l'identification des marchandises au moyen de capteurs, le relèvement des marchandises et leur transport dans une direction différente de la direction initiale sont prévus au niveau du parcours de livraison (3) pour modifier la direction du transport des marchandises.

6. Ensemble selon l'une des revendications précédentes, **caractérisé en ce qu'**un système supplémentaire de commande des véhicules de transport (18) augmente la sécurité de fonctionnement au moyen de plusieurs émetteurs-récepteurs installés en supplément sur des postes d'émission supplémentaires qui présentent différentes fréquences d'émission et sur chaque véhicule de transport (18), à la manière d'un système GPS.

7. Procédé pour entreposer temporairement de manière définie des marchandises de même type mais de tailles différentes après leur fabrication et pour en même temps composer des colis constitués de ces marchandises, le procédé présentant les caractéristiques suivantes :
a) les marchandises produites sont apportées par un parcours de livraison (3) à plusieurs emplacements de transfert qui sont situés au voisinage de robots d'empilement (7) qui remplissent des supports (14) d'empilement,
b) les robots d'empilement (7) servent à remplir plusieurs supports (14) d'empilement qui sont amenés en plusieurs emplacements (10) au moyen de véhicules de transport (18), un accouplement (19) s'encliquetant dans une pièce complémentaire située sur le support (14) d'empilement lorsque un véhicule de transport passe en dessous du support (14) d'empilement, ce qui déclenche automatiquement un système automatique de freinage qui agit sur le support (14) d'empilement à l'arrêt,
c) l'alimentation en énergie des véhicules de transport (18) s'effectue par des conducteurs (20) à induction, et le guidage vers la destination, la détermination de la position et le positionnement sont en même temps commandés au moyen des conducteurs d'induction par l'intermédiaire d'un système de bus de données, l'alimentation en courant étant soutenue par un accumulateur rechargeable, un échange entre différentes parties de conducteurs étant possible en des emplacements de croisement (11),
d) en même temps que l'arrivée aux emplacements (10), des palettes (6) de colis prêtes à l'expédition sont remplies au moyen de plusieurs robots d'empilement (5) à partir de supports (14) d'empilement extraits dans ce but de l'entrepôt temporaire.

8. Procédé selon la revendication 7, **caractérisé en ce qu'**au lieu de conducteurs (20) à induction, des rails codés sont utilisés sur les parcours de déplacement des véhicules de transport (18) et sont palpés par des barrières lumineuses pour le guidage vers la destination, la détermination de la position et le positionnement et **en ce qu'**un échange entre différentes parties de conducteurs s'effectue au moyen de rotations définies des véhicules de transport (18), obtenues par saisie de la vitesse de rotation des roues et de leurs différentes commandes.

9. Procédé selon l'une des revendications 7 ou 8, **caractérisé en ce que** des moyens qui permettent un relèvement des marchandises et la poursuite de leur transport dans une direction différente de la direction initiale sont prévus au niveau du parcours de livraison (3) pour modifier la direction du transport des marchandises.

10. Procédé selon l'une des revendications 7 à 9, **caractérisé en ce qu'**un système supplémentaire de commande des véhicules de transport (18) permet d'augmenter à la manière d'un système GPS la capacité d'entreposage et la sécurité de fonctionnement au moyen de plusieurs postes d'émission supplémentaires travaillant à différentes fréquences d'émission et d'émetteurs-récepteurs supplémentaires installés sur chaque véhicule de transport (18, 9).
